# FASCICULE DE BREVET EUROPEEN

(11) **EP 1 086 801 B1**
(45) Date de publication et mention de la délivrance du brevet: **18.12.2002**
(21) Numéro de dépôt: 00402567.2
(22) Date de dépôt: 18.09.2000
(51) Int. Cl.: B29C 70/48, B29C 70/08, B29D 24/00

(54) **Procédé de fabrication d'un panneau sandwich en matériau composite, et panneau ainsi obtenu**
Verfahren zur Herstellung einer Sandwichverbundplatte und dadurch hergestellte Platte
Method for manufacturing a composite sandwich panel and panel obtained thereby

(30) Priorité: 21.09.1999 FR 9911766
(43) Date de publication de la demande: 28.03.2001
(73) Titulaire: Aerospatiale Matra Airbus S.A., 75781 Paris Cedex 16 (FR)
(72) Inventeur: Fournier, Alain, 31470 Saint Lys (FR); Duret, Nathalie, 31700 Blagnac (FR)
(74) Mandataire: Poulin, Gérard

(56) Documents cités:
- EP-A- 0 722 826

## Description

### Domaine technique

L'invention concerne un procédé de fabrication d'un panneau sandwich en matériau composite comprenant une âme à cellule ouverte, par exemple en forme de nid d'abeilles, mettant en oeuvre la technique du moulage par transfert de résine, généralement appelée technique RTM ("Resin Transfer Molding").

L'invention a également pour objet un panneau sandwich en matériau composite fabriqué selon ce procédé.

### Etat de la technique

La technique traditionnelle de fabrication des panneaux sandwich en matériau composite consiste à draper des nappes ou des tissus de fibres imprégnés de résine sur chacune des deux faces d'une âme à cellules ouvertes le plus souvent constituée par une structure en nid d'abeilles. L'ébauche de pièce obtenue est ensuite placée dans un autoclave où elle subit un cycle de polymérisation permettant d'assurer la cuisson de la résine.

Cette technique traditionnelle a notamment pour inconvénients d'être coûteuse et difficile à mettre en oeuvre. En effet, les opérations de drapage sont réalisées soit manuellement, soit à l'aide de machines très complexes. De plus, il n'est pratiquement pas possible d'obtenir deux pièces parfaitement identiques et l'état de surface de ces pièces est médiocre.

Compte tenu de ces inconvénients, la technique traditionnelle du drapage est remplacée de plus en plus fréquemment par la technique RTM, pour fabriquer des pièces très diverses (pièces de grande taille, à géométrie complexe, intégration de fonction, etc.) notamment dans les industries de pointe telles que les industries aéronautique, automobile et navale.

La technique RTM consiste à placer une préforme de fibres sèches dans un moule, à faire le vide dans celui-ci et à y injecter sous basse pression une résine présentant une très faible viscosité. L'application d'un cycle de polymérisation permet de cuire la résine, avant de démouler la pièce.

Lorsque la technique RTM est appliquée à la fabrication d'un panneau sandwich présentant une âme à cellules ouvertes, par exemple en forme de nid d'abeilles, des précautions doivent être prises afin d'éviter que la résine injectée dans le moule ne remplisse les cellules de l'âme de la pièce. Différentes solutions à ce problème ont déjà été proposées.

Une première solution connue, décrite dans le document EP-A-0 722 825, consiste à interposer successivement un film de colle et un pli de fibres préimprégné de résine entre chacune des faces de l'âme à cellules ouvertes et le revêtement de fibres sèches. Après mise en place de cet ensemble dans un moule et fermeture de celui-ci, un premier cycle de polymérisation permet de cuire la résine contenue dans le pli de fibres préimprégné, et de coller celui-ci sur la face correspondante de l'âme à cellules ouvertes. La résine à très faible viscosité est ensuite injectée dans le moule, de façon à remplir les revêtements de fibres sèches. Le moule est ouvert après polymérisation de la résine d'injection.

Cette technique permet d'éviter le remplissage des cellules ouvertes de l'âme de la pièce par la résine de faible viscosité injectée dans le moule. Elle a toutefois pour inconvénient de conduire à la fabrication d'une pièce comprenant trois résines différentes, qui se traduit par des peaux non homogènes et peut conduire à des problèmes d'adhérence des revêtements sur l'âme de la pièce. En outre, cette technique nécessite l'utilisation de trois éléments (en comptant le revêtement de fibres sèches) ainsi qu'un cycle de fabrication en deux phases (polymérisation de la résine contenue dans les fibres préimprégnées puis injection de la résine RTM et enfin polymérisation de cette résine). Les fibres préimprégnées nécessitent donc la phase de polymérisation pour agir en tant que barrière. De plus, la présence des plis de fibres imprégnés de résine tend à alourdir la pièce obtenue. En effet, la masse surfacique de telles pièces est d'environ 500 g/m² (cette valeur est à multiplier par deux pour tenir compte des deux côtés du panneau). Enfin, la fabrication est longue.

Une autre solution connue, décrite dans le document FR-A-2 740 383, consiste à interposer un film de colle et une membrane étanche entre chacune des faces de l'âme à cellules ouvertes et le revêtement de fibres sèches correspondant. Après fermeture du moule, la colle est polymérisée, de façon à coller chacune des membranes sur l'âme à cellules ouvertes, puis la résine de très faible viscosité est injectée dans le moule et polymérisée.

Par rapport à la précédente, cette technique simplifie le cycle de polymérisation et permet de réduire la masse de la pièce. Toutefois, cette technique n'est pas aisément utilisable pour la fabrication de panneaux à géométrie complexe. En effet, la membrane étanche est difficilement déformable, ce qui entraîne des problèmes de plis lors de sa mise en place sur une âme non plane.

Une troisième technique de fabrication de panneaux sandwich est proposée dans le document EP-A-0 722 826. Dans ce cas, on interpose un film intumescent entre chacune des faces de l'âme à cellules ouvertes et le revêtement de fibres sèches. Après fermeture du moule, un cycle d'expansion et de polymérisation des films intumescents a pour effet de remplir de mousse les cellules ouvertes de l'âme. La résine à très faible viscosité est ensuite injectée dans le moule, puis polymérisée.

Lorsqu'elle est mise en oeuvre en une seule phase, cette technique permet d'assurer un collage direct de la résine d'injection sur l'âme à cellules ouvertes. Toutefois, elle présente l'inconvénient notable que la mousse formée par les films intumescents durant le cycle d'expansion et de polymérisation de ces films se propage également dans les revêtements de fibres sèches, qu'elles remplissent partiellement jusqu'à la surface du panneau. Par conséquent, la résine injectée ensuite dans le moule ne remplit qu'en partie les revêtements de fibres sèches. Dans ces conditions, la pièce obtenue ne présente pas les caractéristiques mécaniques désirées. En outre, le remplissage intégral des cellules de l'âme par la mousse se traduit par un accroissement indésirable de la masse du panneau finalement obtenu.

Lorsqu'elle est mise en oeuvre en deux phases, cette technique devient plus lourde. En effet, il faut d'abord appliquer un cycle d'expansion au film intumescent, puis enchaîner sur l'injection de la résine et sa polymérisation, ce qui complique l'opération.

Dans le mode de réalisation décrit en référence à la figure 5 dans ce document EP-A-0 722 826, il est proposé de combiner la technique qui vient d'être décrite avec la technique divulguée dans le document EP-A-0 722 825. En d'autres termes, il est proposé d'interposer un film de colle et un pli de film préimprégné de résine entre chacun des films intumescents et le revêtement de fibres sèches correspondant. On réalise alors simultanément, au cours d'un même cycle de polymérisation, l'expansion et la polymérisation des films intumescents, la polymérisation de la colle et la polymérisation de la résine qui imprègne les plis de fibres préimprégnés. Comme dans les autres cas, la résine de faible viscosité est ensuite injectée dans le moule, puis polymérisée.

On peut penser que cette dernière technique permet d'éviter la migration de la mousse à l'intérieur des revêtements de fibres sèches, du fait de la présence des plis de fibres préimprégnés de résine entre les films intumescents et les revêtements de fibres sèches.

Cependant, le temps de fabrication du panneau est sensiblement accru, du fait que le premier cycle de polymérisation doit assurer à la fois l'expansion et la polymérisation des films intumescents, la polymérisation de la colle et la polymérisation de la résine contenue dans les plis de fibres préimprégnés. De plus, on retrouve nécessairement dans ce cas tous les inconvénients propres à la technique décrite dans le document EP-A-0 722 825, c'est-à-dire notamment un accroissement de la masse du panneau et des problèmes d'hétérogénéité des peaux et d'adhérence entre les différentes couches.

On connaît par ailleurs, du document EP-A-0 628 406, un panneau sandwich en matériau composite fabriqué selon la technique traditionnelle du drapage et dans lequel la durée de vie du panneau est accrue en interposant un film intumescent entre l'une des peaux et l'âme en nid d'abeilles. Plus précisément, la mousse formée par la polymérisation du film intumescent ne remplit les cellules de l'âme en nid d'abeilles qu'à proximité de la face correspondante de celle-ci.

### Exposé de l'invention

L'invention a principalement pour objet un procédé de fabrication d'un panneau sandwich en matériau composite utilisant la technique RTM et permettant d'obtenir en une seule phase, c'est-à-dire en un temps très court, une pièce de structure simple et légère, dans laquelle la résine de faible viscosité injectée dans le moule est directement collée sur l'âme à cellules ouvertes, sans nécessiter de cycle de fabrication trop complexe.

Conformément à l'invention, ce résultat est obtenu au moyen d'un procédé de fabrication d'un panneau sandwich en matériau composite, caractérisé en ce qu'il comprend les étapes suivantes :
- mise en place, dans un moule, d'un ensemble comprenant une âme à cellules ouvertes, un film de matériau intumescent recouvrant chacune des faces de l'âme, un tissu barrière sec recouvrant chacun des films, et un revêtement de fibres sèches recouvrant chacun des tissus barrières, lesdits tissus barrières étant étanches à une mousse susceptible d'être obtenue lors de la polymérisation desdits films et mouillables par une résine susceptible d'être injectée dans le moule ;
- fermeture du moule ;
- mise sous pression et chauffage du moule selon un cycle d'expansion et de polymérisation du matériau intumescent, de façon à former ladite mousse, obturant les cellules de l'âme sur chacune de ses faces, sans imprégner les tissus barrières secs ;
- mise sous vide du moule et injection de ladite résine dans celui-ci, de façon à imprégner les revêtements de fibres sèches et les tissus barrières secs ;
- exécution d'un cycle de polymérisation de la résine ;
- démoulage du panneau ainsi obtenu.

Dans ce procédé, les tissus barrières secs combinés à la mise sous pression du moule empêchent toute pénétration des revêtements de fibres sèches par la mousse formée par les films intumescents lors de leur polymérisation. En revanche, ces tissus barrières secs sont imprégnés en même temps que les revêtements de fibres sèches lors de l'injection de la résine dans le moule, de telle sorte que celle-ci adhère directement sur chacune des faces de l'âme à cellules ouvertes, sans remplir lesdites cellules, du fait qu'elles sont alors déjà obturées par la mousse.

Il est à noter également que le cycle de polymérisation préalable à l'injection de la résine dans le moule a pour seule fonction d'assurer l'expansion et la polymérisation des films intumescents. Il s'agit donc d'une opération particulièrement simple et facile à mettre en oeuvre.

Il est à noter que l'homme du métier, désirant résoudre le problème posé par le remplissage de la structure en nid d'abeilles, utilisera tout naturellement un pli de fibres préimprégnées de résine. L'utilisation d'un tissu polyamide provenant de l'industrie textile apparaît au contraire comme une solution surprenante pour un spécialiste de l'industrie aéronautique. Un tel tissu ne nécessite pas d'action particulière pour agir en tant que barrière et assurer l'étanchéité du nid d'abeille. Sa simple application est suffisante. Il permet donc une conception de pièce en une seule phase (gain de temps de fabrication : une semaine au lieu d'un mois pour un cycle de fabrication habituel), un gain de masse et de coût.

Afin d'illustrer le gain de masse obtenu en utilisant un tissu conformément à l'invention, on notera que la masse surfacique du panneau obtenu est d'environ 30 à 40 g/m² (valeur à multiplier par deux pour tenir compte des deux côtés du panneau). Cette valeur est à comparer aux 500 g/m² environ (à multiplier également par deux) obtenus en utilisant la technique décrite dans le document EP-A-0 722 825.

Avantageusement, on utilise des films intumescents d'épaisseur telle qu'après polymérisation, ils ne remplissent les cellules de l'âme qu'à proximité des faces de cette dernière. Cet agencement, qui correspond notamment à l'utilisation de films intumescents dont l'épaisseur est d'environ 2,5 mm, permet de limiter la masse du panneau obtenu en réduisant le volume de mousse contenu dans les cellules de l'âme.

Par ailleurs, on utilise de préférence des tissus barrières en polyamide calandré, c'est-à-dire en polyamide ayant subi un traitement mécanique de calandrage.

L'invention a également pour objet un panneau sandwich en matériau composite, comprenant une âme à cellules ouvertes obturées par une mousse et des peaux recouvrant les deux faces de l'âme, lesdites peaux étant formées de fibres et de résine et comprenant un revêtement de fibres imprégné de résine polymérisée, les cellules de l'âme étant obturées par une mousse sur chacune desdites faces, panneau caractérisé en ce que chacune des peaux comprend, entre l'âme du panneau et le revêtement de fibres, un tissu barrière étanche à ladite mousse et mouillable par la résine, le tissu barrière et le revêtement de fibres étant tous deux imprégnés de ladite résine polymérisée et collée sur l'âme du panneau.

### Brève description des dessins

On décrira à présent, à titre d'exemple non limitatif, un mode de réalisation préféré de l'invention, en se référant aux dessins annexés, dans lesquels :
- la figure 1 est une vue en coupe qui représente schématiquement et de façon éclatée les différents éléments d'un ensemble susceptible d'être placé dans un moule afin de fabriquer un panneau sandwich en matériau composite selon la technique RTM, conformément à l'invention ;
- la figure 2 est une vue en coupe représentant schématiquement et de façon éclatée un panneau composite obtenu à partir de l'ensemble des éléments illustrés sur la figure 1 ; et
- la figure 3 est une vue en perspective, avec arrachements en coupe, représentant un moule fermé dans lequel ont été placés les différents éléments constitutifs du panneau, conformément à l'invention.

### Description détaillée d'un mode de réalisation préféré de l'invention

Comme tout procédé utilisant la technique du moulage par transfert de résine, le procédé selon l'invention utilise un moule (non représenté) délimitant intérieurement une cavité dont la forme et les dimensions correspondent à celles du panneau à fabriquer. Il est à noter que cette forme et ces dimensions peuvent être quelconques, sans sortir du cadre de l'invention. En particulier, le procédé conforme à l'invention permet de fabriquer aussi bien un panneau plan qu'un panneau ayant des formes plus complexes.

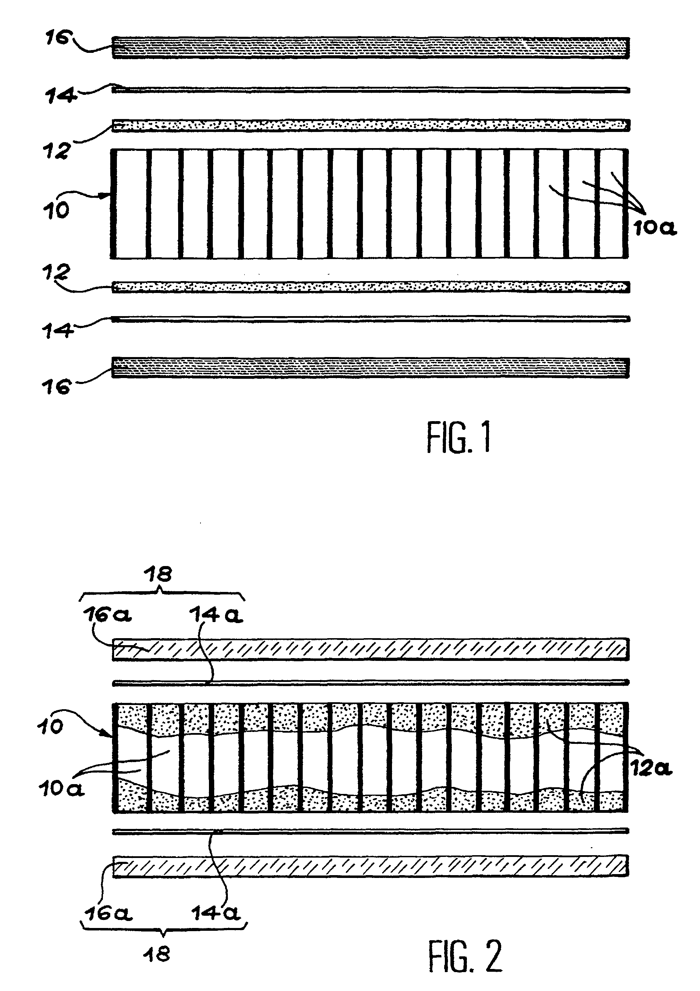

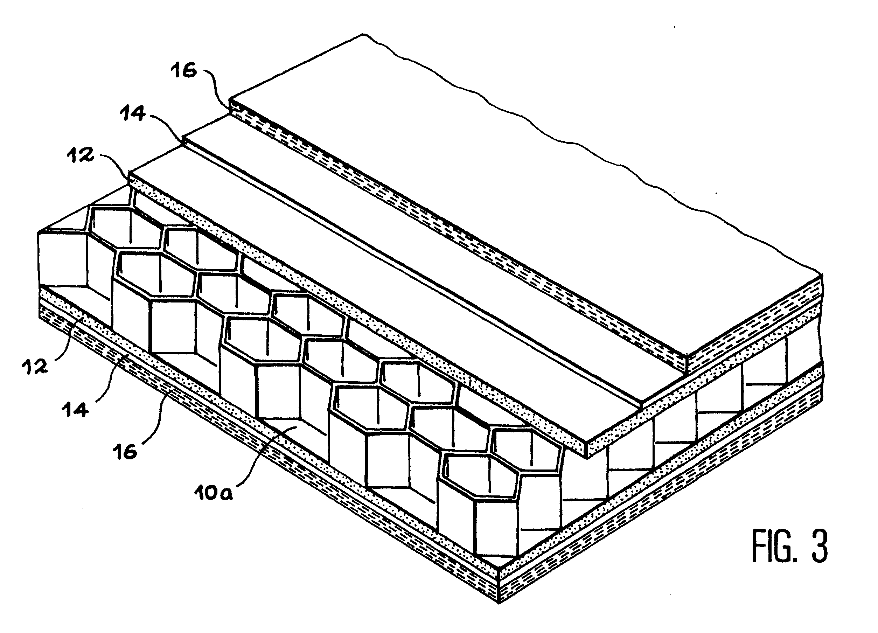

Comme l'illustrent les figures 1 et 3, on place dans la cavité du moule un ensemble comprenant une âme 10 à cellules ouvertes, un film 12 de matériau intumescent, recouvrant intégralement et directement chacune des deux faces de l'âme 10, un tissu barrière sec 14 recouvrant intégralement et directement chacun des films 12, et un revêtement 16 de fibres sèches recouvrant intégralement et directement chacun des tissus barrières 14. Lorsqu'il est placé dans la cavité du moule, l'empilement formé par cet ensemble remplit intégralement cette cavité.

L'âme 10 à cellules ouvertes peut être réalisée en tout matériau à cellules ouvertes utilisable pour la fabrication d'un panneau sandwich en matériau composite. Cette âme peut notamment présenter la forme d'une structure en nid d'abeilles, définissant des alvéoles 10a, par exemple de section hexagonale, débouchant sur chacune des deux faces de la structure. La nature du matériau dans lequel est formée l'âme 10, l'épaisseur de celle-ci et la taille des alvéoles 10a dépendent de l'application envisagée.

Chacun des deux films 12 est réalisé en un matériau apte à former une mousse à cellules fermées lorsqu'il a subi un cycle d'expansion et de polymérisation approprié. Ce matériau est choisi notamment en raison de sa légèreté et de son aptitude à former une barrière s'opposant à l'entrée dans les alvéoles 10a de la résine susceptible d'être injectée dans le moule. A titre d'exemple nullement limitatif, ce matériau peut notamment être un film de référence Synspand 9899 CF-100 mil, commercialisé par la société **DEXTER HYSOL.**

De préférence, l'épaisseur de chacun des films 12 de matériau intumescent est choisie afin que la mousse formée après le cycle d'expansion et de polymérisation de ce matériau ne remplisse que les parties des alvéoles 10a situées à proximité des deux faces de l'âme 10. A cet effet, on utilise avantageusement des films 12 de matériau intumescent dont l'épaisseur est d'environ 2,5 mm.

Les tissus barrières secs 14 sont des tissus fins et légers, qui sont choisis principalement en fonction de leur porosité. Plus précisément, ces tissus doivent être impérativement étanches à la mousse formée par la polymérisation du matériau intumescent constituant les films 12, tout en étant mouillables par la résine de très faible viscosité injectée ensuite dans le moule. A titre d'exemple non limitatif, les tissus barrières secs 14 peuvent notamment être réalisés en polyamide calandré, c'est-à-dire qu'ils sont alors constitués de tissus de polyamide ayant subi un traitement mécanique de calandrage. La porosité de ces tissus a été caractérisée par la mesure du débit d'air passant à travers le tissu barrière en appliquant une pression de 200 Pa à 130 Pa. La valeur de 59 ℓ/m²/s est satisfaisante. Néanmoins, ces essais ont donné des valeurs allant de 9 ℓ/m²/s à 42 ℓ/m²/s pour une pression de 130 Pa et allant de 13 ℓ/m²/s à 59 ℓ/m²/s pour une pression de 200 Pa. Ces valeurs sont données à titre indicatif et n'ont donc pas de caractère limitatif. Elles sont liées au type de résine utilisée.

Les revêtements 16 de fibres sèches sont préparés selon les techniques habituelles de mise en oeuvre du procédé de moulage par transfert de résine, à partir de fibres longues sélectionnées et orientées pour satisfaire aux caractéristiques mécaniques requises dans l'application envisagée.

Lorsque l'empilement constituant l'ensemble illustré de façon éclatée sur la figure 1 a été placé dans la cavité du moule (figure 3), celui-ci est fermé et mis sous pression.

Le moule est ensuite chauffé selon un cycle d'expansion et de polymérisation du matériau intumescent dans lequel sont formés les films 12. Pendant ce cycle, dont la durée et les températures dépendent de la nature du matériau intumescent choisi, celui-ci se transforme en mousse 12a, qui pénètre partiellement dans les alvéoles 10a, comme le montre la figure 2. Comme on l'a déjà observé, cette mousse se caractérise par des cellules fermées, qui ont pour effet d'obturer intégralement les alvéoles 10a sur les deux faces de l'âme 10.

Lorsqu'on a donné au film 12 de matériau intumescent une épaisseur limitée, par exemple d'environ 2,5 mm, la mousse 12a ne pénètre dans les alvéoles 10a qu'à proximité des deux faces de l'âme 10.

Conformément à l'invention, pendant ce cycle d'expansion et de polymérisation du matériau intumescent, la présence des tissus barrières secs 14 combinée à la mise sous pression du moule ont pour effet d'éviter toute expansion de la mousse 12a vers l'extérieur et notamment à l'intérieur des revêtements 16 de fibres sèches. A la fin du cycle d'expansion et de polymérisation du matériau intumescent, c'est-à-dire après la cuisson complète de la mousse 12a, les deux revêtements 16 de fibres sèches ainsi que les tissus barrières secs 14 ne sont donc pas du tout imprégnés de mousse. En revanche, l'âme 10 est totalement obturée sur ses deux faces par la mousse 12a.

La pression appliquée dans le moule est alors relâchée et celui-ci est mis sous vide et amené à la température d'injection de la résine de très faible viscosité. Cette température est généralement inférieure à la température de polymérisation du matériau intumescent. Elle dépend de la nature de la résine que l'on désire injecter.

L'injection est ensuite réalisée selon les techniques utilisées de façon classique dans les procédés de moulage par transfert de résine. On imprègne ainsi de résine, sur toute leur épaisseur et dans l'ensemble du panneau à fabriquer, les deux revêtements 16 de fibres sèches, ainsi que les deux tissus barrières 14. La résine vient ainsi directement au contact des deux faces de l'âme 10 du panneau. On réalise donc une parfaite adhérence des peaux 18 constituées par les revêtements imprégnés de résine 16a et par les tissus barrières imprégnés de résine 14a, sur les deux faces de l'âme 10.

On applique ensuite, de façon classique, un nouveau cycle de polymérisation de la résine qui vient d'être injectée. Les températures et durées des différentes étapes de ce cycle dépendent de la nature de la résine utilisée.

Après refroidissement, le moule est ouvert et le panneau sandwich obtenu en est extrait.

La description qui précède montre que le panneau ainsi obtenu est bien exempt de résine à l'intérieur des cellules ouvertes de l'âme 10, alors que les revêtements 16a et les tissus barrières 14a formant les peaux 18 du panneau sont totalement remplis de résine et dépourvus de mousse 12a. De plus, la structure du panneau est particulièrement simple et l'imprégnation des tissus barrières 14 par la résine permet de garantir une parfaite adhérence des peaux sur l'âme du panneau.

La description qui précède montre en outre que la mise en oeuvre du procédé est particulièrement simple et rapide puisque le premier cycle de polymérisation est limité à l'expansion et à la polymérisation du matériau intumescent dans lequel sont formés les films 12.

## Revendications

1. Procédé de fabrication d'un panneau sandwich en matériau composite, **caractérisé en ce qu'**il comprend les étapes suivantes :
- mise en place, dans un moule, d'un ensemble comprenant une âme (10) à cellules ouvertes, un film (12) de matériau intumescent recouvrant chacune des faces de l'âme, un tissu barrière sec (14) recouvrant chacun des films (12), et un revêtement (16) de fibres sèches recouvrant chacun des tissus barrières, lesdits tissus barrières étant étanches à une mousse (12a) susceptible d'être obtenue lors de la polymérisation desdits films (12) et mouillables par une résine susceptible d'être injectée dans le moule ;
- fermeture du moule ;
- mise sous pression et chauffage du moule selon un cycle d'expansion et de polymérisation du matériau intumescent (12), de façon à former ladite mousse (12), obturant les cellules de l'âme (10) sur chacune de ses faces, sans imprégner les tissus barrières secs (14) ;
- mise sous vide du moule et injection de ladite résine dans celui-ci, de façon à imprégner les revêtements (16) de fibres sèches et les tissus barrières secs (14) ;
- exécution d'un cycle de polymérisation de la résine ;
- démoulage du panneau ainsi obtenu.

2. Procédé selon la revendication 1, dans lequel on utilise des films (12) d'épaisseur telle qu'après polymérisation ladite mousse (12a) ne remplit les cellules de l'âme (10) qu'à proximité des faces de cette dernière.

3. Procédé selon la revendication 2, dans lequel on utilise des films (12) dont l'épaisseur est d'environ 2,5 mm.

4. Procédé selon l'une quelconque des revendications précédentes, dans lequel on utilise des tissus barrières (14) en polyamide calandré.

5. Panneau sandwich en matériau composite, comprenant une âme (10) à cellules ouvertes obturées par une mousse (12a) et des peaux recouvrant les deux faces de l'âme, lesdites peaux étant formées de fibres et de résine et comprenant un revêtement de fibres (16a) imprégné de résine polymérisée, les cellules de l'âme (10) étant obturées par une mousse (12a) sur chacune desdites faces, panneau **caractérisé en ce que** chacune des peaux comprend, entre l'âme du panneau et le revêtement de fibres (16a), un tissu barrière (14a) étanche à ladite mousse (12a) et mouillable par la résine, le tissu barrière (14a) et le revêtement de fibres (16a) étant tous deux imprégnés de ladite résine polymérisée et collée sur l'âme du panneau.

6. Panneau selon la revendication 5, dans lequel ladite mousse (12a) ne remplit les cellules de l'âme (10) qu'à proximité des faces de cette dernière.

7. Panneau selon l'une quelconque des revendications 5 et 6, dans lequel les tissus barrières (14a) sont réalisés en polyamide calandré.

## Patentansprüche

1. Verfahren zur Herstellung einer Sandwichplatte aus Verbundmaterial, **dadurch gekennzeichnet, dass** es die folgenden Schritte umfasst:
- Einbringen einer Gesamtheit in eine Form, umfassend einen Kern (10) mit offenen Zellen, einen Film (12) aus intumeszentem Material, welcher jede der Seiten des Kerns bedeckt, ein eine Barriere bildendes trockenes textiles Flächengebilde (14), das jeden der Filme (12) bedeckt, und eine Abdeckung (16) von trockenen Fasern, die jedes der eine Barriere bildenden textilen Flächengebilde bedeckt, wobei die genannten, eine Barriere bildenden textilen Flächengebilde gegen einen Schaum (12a) dicht sind, der geeignet ist, während der Polymerisation der genannten Filme (12) erhalten zu werden, und durch ein Harz benetzbar sind, das geeignet ist, in die Form eingespritzt zu werden;
- Schließen der Form;
- Unterdrucksetzen und Erhitzen der Form gemäß einem Zyklus der Expansion und der Polymerisation des intumeszenten Materials (12) in der Art und Weise, dass der genannte Schaum (12) gebildet wird, welcher die Zellen des Kerns (10) über jede seiner Flächen verstopft, ohne die eine Barriere bildenden trockenen textilen Flächengebilde (14) zu imprägnieren;
- Setzen der Form unter Vakuum bzw. Unterdruck und Einspritzung des genannten Harzes in dieselbe in der Art und Weise, dass die Abdeckungen (16) von trockenen Fasern und die eine Barriere bildenden trockenen textilen Flächengebilde (14) imprägniert werden;
- Ausführen eines Zyklus der Polymerisation des Harzes;
- Herausnehmen der so erhaltenen Platte aus der Form.

2. Verfahren gemäß Anspruch 1, in welchem man Filme (12) von einer solchen Dicke verwendet, dass nach der Polymerisation der genannte Schaum (12a) die Zellen des Kerns (10) nur in der Nähe der Flächen des letzteren füllt.

3. Verfahren gemäß Anspruch 2, in welchem man Filme (12) verwendet, deren Dicke ungefähr 2,5 mm ist.

4. Verfahren gemäß irgendeinem der vorhergehenden Ansprüche, in welchem man eine Barriere bildende textile Flächengebilde (14) aus kalandriertem bzw. satiniertem Polyamid benutzt.

5. Sandwichplatte aus Verbundmaterial, umfassend einen Kern (10) mit offenen Zellen, die durch einen Schaum (12a) verschlossen sind, und Außenschichten, welche die beiden Seiten des Kerns bedecken, wobei die genannten Außenschichten von Fasern und Harz gebildet sind und eine Abdeckung (16a) von Fasern, die mit polymerisiertem Harz imprägniert ist, umfassen, wobei die Zellen des Kerns (10) durch einen Schaum (12a) auf jeder der genannten Seiten verschlossen sind, wobei die Platte **dadurch gekennzeichnet ist, dass** jede der Außenschichten zwischen dem Kern der Platte und der Abdeckung (16a) von Fasern ein eine Barriere bildendes textiles Flächengebilde (14a) umfasst, das gegen den genannten Schaum (12a) dicht ist und durch das Harz benetzbar ist, wobei das eine Barriere bildende textile Flächengebilde (14a) und die Abdeckung (16a) von Fasern alle beide von dem genannten polymerisierten Harz imprägniert und auf den Kern der Platte geklebt sind.

6. Platte gemäß dem Anspruch 5, in welcher der genannte Schaum (12a) die Zellen des Kerns (10) nur in der Nähe der Seiten dieses letzteren füllt.

7. Platte gemäß irgendeinem der Ansprüche 5 und 6, in welcher die eine Barriere bildenden textilen Flächengebilde (14a) aus kalandriertem bzw. satiniertem Polyamid hergestellt sind.

## Claims

1. Method of manufacturing a sandwich panel made of composite material, **characterized in that** it comprises the following steps:
- placing, in a mould, an assembly comprising an open cell core (10), a film (12) of intumescent material covering each of the faces of the core, a dry barrier fabric (14) covering each of the films and an overlay (16) of dry fibres covering each of the barrier fabrics, said barrier fabrics being sealed against a foam (12a) capable of being provided during the polymerization of said films (12) and which can be wetted by a resin capable of being injected into the mould;
- closing the mould;
- pressurizing and heating the mould according to a cycle for the expansion and polymerization of the intumescent material (12), in a way that forms said foam (12), closing off the cells of the core (10) on each of its faces, without impregnating the dry barrier fabrics (14);
- evacuating the mould and injecting said resin into it in a manner that impregnates the overlays (16) of dry fibres and the dry barrier fabrics (14);
- carrying out a cycle for polymerization of the resin;
- stripping the panel obtained from the mould.

2. Method according to claim 1, in which films (12) are used of a thickness such that after polymerization, said foam (12a) only fills the parts of the cells of the core (10) which are close to the faces of the core.

3. Method according to claim 2, in which films (12) are used which have a thickness of about 2.5 mm.

4. Method according to any one of the preceding claims, in which barrier fabrics (14) made of calendered polyamide are used.

5. Sandwich panel made of a composite material comprising an open cell core (10) sealed by a foam (10a) and skins covering both faces of the core, said skins being formed of fibres and resin, and comprising a polymerized resin-impregnated fibre overlay (16a), the cells of the core (10) being sealed by a foam (12a) on each of its faces, **characterized in that** each of the skins comprises, between the core of the panel and the fibre overlay (16a), a barrier fabric (14a) tight to said foam (12a) and wettable by the resin, the fibre overlay (16a) and the barrier fabric (14a) both being impregnated with one and the same resin polymerized and stuck onto the core of the panel.

6. Panel according to claim 5, in which said foam (12a) only fills the parts of the cells of the core (10) which are close to the faces of the core.

7. Panel according to either of the claims 5 and 6, in which the barrier fabrics are produced in calendered polyamide.
